Europäisches Patentamt

European Patent Office

Office européen des brevets

(11) Publication number: **0 320 514**
A1

(12) # EUROPEAN PATENT APPLICATION

published in accordance with Art. 158(3) EPC

(21) Application number: 88905435.9

(22) Date of filing: 17.06.88

Data of the international application taken as a basis:

(86) International application number:
PCT/JP88/00594

(87) International publication number:
WO88/10279 (29.12.88 88/28)

(51) Int. Cl.³: **C 08 G 75/02**
**C 08 L 81/02**

(30) Priority: 19.06.87 JP 154042/87

(43) Date of publication of application:
21.06.89 Bulletin 89/25

(84) Designated Contracting States:
DE FR GB IT

(71) Applicant: TORAY INDUSTRIES, INC.
2-1, Nihonbashi Muromachi 2-chome Chuo-ku
Tokyo 103(JP)

(72) Inventor: UMEZAWA, Masao
171-32, Kobirai Ritto-cho Kurita-gun
Shiga-ken 520-30(JP)

(74) Representative: Coleiro, Raymond
MEWBURN ELLIS & CO. 2/3 Cursitor Street
London EC4A 1BQ(GB)

(54) CROSSLINKED POLYARYLENE RESIN AND PROCESS FOR ITS PRODUCTION.

(57) A sulfur-containing polyarylene resin and a process for its production are disclosed. The crosslinked polyarylene resin is a polyarylene resin containing sulfur atoms in the main chain, which has a degree of crosslinking of the aryl groups of 5 % or more and a high heat resistance. The process comprises heating a sulfur-containing polyarylene resin in contact with at least one metal compound selected from among iron, chromium and cobalt compounds.

CP/MAS $^{13}$C-NMR Spectrum of Infusible PPS (Detailed Illustration of SP² Region)

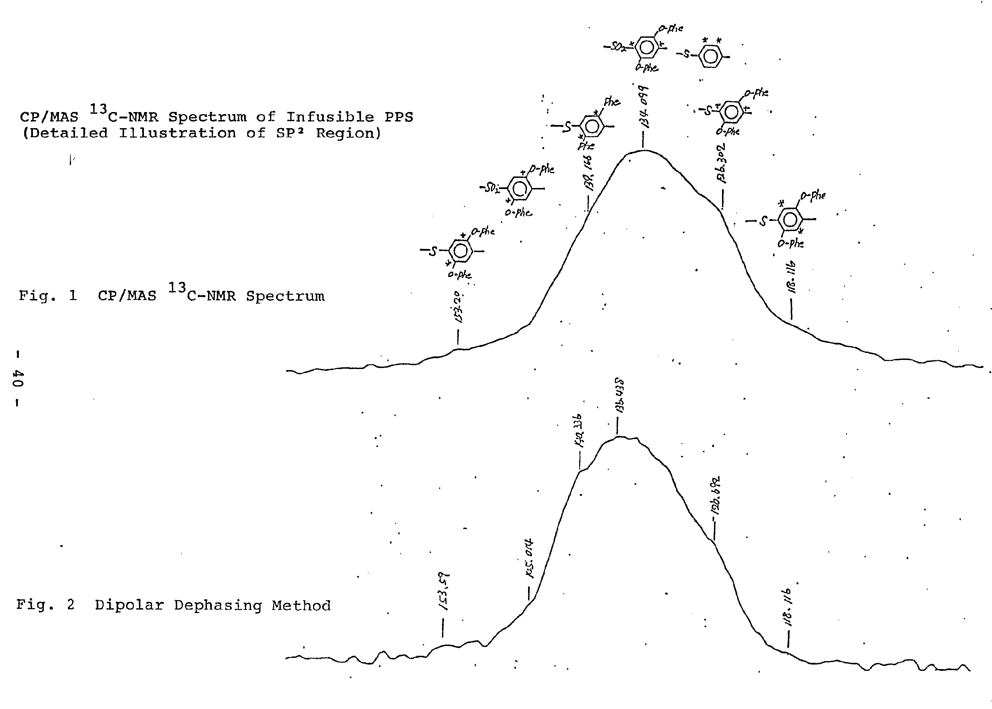

Fig. 1   CP/MAS $^{13}$C-NMR Spectrum

EP 0 320 514 A1

Croydon Printing Company Ltd

Specifications

Crosslinked Polyarylene Resins and
Methods for Producing Them

Technical Field of the Invention

The invention relates to highly heat-resistant, sulfur-containing polyarylene resins, and methods for producing them.

Technical Background of the Invention

With high resistance to heat and chemicals, sulfur-containing polyarylene resins have recently come into use in a large variety of applications. It is certain that sulfur-containing polyarylene resins lately have been more widely accepted as special polymers owing not only to the above-mentioned characteristics but also to other good features, including high tensile strength, to match other common resins. However, sulfur-containing polyarylene resins inevitably melt or deteriorate in properties when exposed to high temperature around their melting point for a considerable period of time.

Some methods for solving these problems have been proposed as below:

Specifications in USP 4,251,575.

A peroxide such as hydrogen peroxide is used to treat only the surface of molded sulfur-containing polyarylene resin to increase its infusibility or to harden it.

However, troublesome treatment procedures are required, and the surface treatment cannot improve the bulk properties, indicating that such methods cannot serve for essential improvement in resistance to melting of the resin as a whole.

Moreover, these method cannot achieve an adequate increase in resistance to high temperatures near the melting point.

Methods for curing sulfur-containing polyarylenes are presented in some patents including Japanese Patent Early Disclosure No.213262-1986. The methods, however, are designed to raise the rate of increase in melt viscosity of sulfur-containing polyarylene resins, and therefore are intended for a purpose different from that of the present invention.

Coating methods for sulfur-containing polyarylene resins are presented in some patents including Japanese Patent Early Disclosure No.90670-1984. However, they address coating methods for sulfur-containing polyarylenes, and therefore are intended for a purpose different from that of the present invention.

The present inventors have achieved the invention after making investigations which seek to improve sulfur-containing polyarylene resins so that they will not melt after being molded and that they will not suffer from deterioration when left at a high temperature near their melting point.

### Detailed Description of the Invention

The invention relates to highly heat-resistant sulfur-containing polyarylene resins whose backbone comprises sulfur atoms and in which aryl groups are crosslinked. It also relates to highly heat-resistant molded crosslinked polyarylene resins in which two (2) molar percent or more of the sulfur atoms in the backbone chains form sulfoxide bonding and/or sulfone bonding and in which aryl groups are crosslinked.

In addition, it relates to those crosslinked polyarylene resins which give a peak around 134ppm in a spectrum measured by the CP/MAS (cross-polarization/magic angle spinning) method combined with high-resolution solid NMR equipment using of a radioactive isotope of carbon (C) as the measuring nucleus at a frequency of 100 megahertz, a contact time of two (2) milliseconds and a pulse separation of 3.8 seconds, with the division of the spectral band intensity at 139ppm by that at the above-mentioned peak giving a quotient equal to or greater than 0.3.

Furthermore, it relates to those crosslinked polyarylene resins which gives a peak around 136ppm in a spectrum measured by the dipolar dephasing method combined with high-resolution solid NMR equipment using a radioactive isotope of carbon (C) as measuring nucleus at a frequency of 100 megahertz, a contact time of two (2) milliseconds and a pulse separation of 3.8 seconds, with the division of the spectral band intensity at 139ppm by that at the above-mentioned peak giving a quotient equal to or greater than 0.3.

Moreover, it relates to those crosslinked polyarylene resins which give a peak around 134ppm in a spectrum measured by the CP/MAS method combined with high-resolution solid NMR equipment using a radioactive isotope of carbon (C) as measuring nucleus at a frequency of 100 megahertz, a contact time of two (2) milliseconds and a pulse separation of 3.8 seconds, with the division of the spectral band intensity at 118ppm and 153 by that at the above-mentioned peak giving a quotient equal to or greater than 0.08 and 0.04, respectively.

It further relates to sulfur-containing polyarylene resin composites which consist of a sulfur-containing polyarylene resin with its backbone comprising sulfur atoms, combined with powder of at least one of the metals in the group of iron, chromium and cobalt, and/or powder of a compound(s) of these metals added to the resin up to a total content of two (2) weight percent or more relative to the weight of the resin.

It also relates to crosslinked polyarylene resin production methods which are characterized by the heating of a crosslinked sulfur-containing polyarylene resin in contact with powder of at least one of the metals in the group of iron, chromium and cobalt and/or in contact with powder of a compound(s) of these metals.

Best Way of Application of the Invention

The expression "sulfur-containing polyarylene resins" as used herein represents those polyarylene resins whose backbone chains comprise sulfur atoms and also comprises the arylene group as a principal component.

Major examples of such resins include polyphenylene sulfide (hereafter referred to as PPS) and its copolymers; polynaphthalene sulfide and its copolymers; and poly-xylylen and its copolymers.

They also include polyphenylene sulfide sulfone and its copolymers; polyphenylene sulfide ketone and its copolymers; polyphenylene sulfide sulfone ketone and its copolymers; polyamides comprising thioaniline as deamine component; and polymers comprising the ether group of polyphenylene ether sulfone.

In the sulfur-containing polyarylene resins covered by the invention, part of the aryl groups contained are crosslinked, with five (5) percent or more of the aryl groups being involved in the crosslinking. The degree of crosslinking among aryl groups should preferably be not less than 12 percent, and should more desirably be not less than 20 percent. A degree of crosslinking of less than five (5) molar percent may lead to a low infusibility while a degree greater than 20 percent will result in an infusible polymer material regardless of the molecular structure of the sulfur-containing polyarylene resin used.

Polymers in which part of the sulfur atoms are oxidized are particularly suitable as material for the resins covered by the invention. Arylene sulfone, arylene sulfide, arylene sulfoxide and other similar substances may coexist in such polymers.

For molded polyarylene resins with backbone chains comprising oxidized sulfur atoms, their molar fraction should preferably be not less than two (2) percent. It should more desirably be not less than five (5) percent. It should still more desirably be not less than 10 percent.

Crosslinking alone may largely increase the heat resistance and chemical resistance as compared with non-crosslinked materials. Oxidation of the backbone chains can further improve these properties.

A polyarylene resin of such a structure may not suffer from large dimensional changes when exposed to heat, chemicals, water, etc.

Polymers as covered by the invention require a degree of crosslinking among aryl groups of not less than five (5) percent. Needless to say, however, crosslinking may also occur among groups other than aryl.

Direct crosslinking between aryl groups produces an extremely rigid polymer. Crosslinking through ether linkage, in which two aryl groups are connected with an oxygen atom in between, offers the great advantage that the resultant polymer has an increased flexibility. The use of ether linkage for crosslinking between aryl groups is particularly desirable where fiber or film is to be produced from the polymer. Crosslinking through sulfur (sulfide) or sulfon oxide (sulfone, sulfoxide) may also be used for connecting aryl groups.

Needless to say, two or more of these connections may coexist to achieve a crosslinked structure. The number of crosslinking chains extending from one aryl group is not necessarily be one, but two or more crosslinking chains may extend from one aryl group.

The existence of such crosslinking, the degree of crosslinking and the degree of oxidation of sulfur atoms can be determined by such methods as solid NMR, laser Raman spectroscopy, FT and IR.

In particular, the molecular structure of a polymer can be determined accurately by using high-resolution solid NMR equipment, such as the JEOL Ltd. JNM-FX100 high-resolution solid NMR analyzer, under the following conditions.

The desirable spectral observation conditions are: the use of a radioactive isotope of carbon (C) as the measuring nucleus at 100 megahertz, combined with the CP/MAS or dipole dephasing method at a contact time of two (2) milliseconds and pulse separation of 3.8 seconds.

It is particularly desirable for polymers as covered by the invention to show the following features when observed under the above-mentioned measuring conditions.

Such polymers should preferably give a peak in the neighborhood of 134ppm in a spectrum observed by the CP/MAS method, with the division of the spectral band intensity at 139ppm by that at the peak giving a quotient of not less than 0.3. It is more desirable for the quotient to be not less than 0.5. Polymers giving such a high quotient generally have drastically increased heat resistance.

In addition, such polymers should preferably give a peak in the neighborhood of 136ppm in an NMR spectrum observed by the dipole dephasing method, with the division of the spectral band intensity at 139ppm by that at the peak giving a quotient of not less than 0.3. It is more desirable for the quotient to be not less than 0.5. Polymers giving such a high quotient generally have a drastically increased heat resistance.

Furthermore, polymers may also be high in resistance to heat and chemicals if they give a peak in the neighborhood of 134ppm in a spectrum observed by the CP/MAS method with the division of the spectral band intensity at 118ppm and 153ppm by that at the peak giving a quotient of not less than 0.08 and not less than 0.04, respectively.

For purposes of the above spectral band intensity observation by the CP/MAS or dipole dephasing method, the values at 100ppm and 170ppm should be taken as reference points and a straight line should be drawn through them to measure the intensity at other points based on that reference line.

Polymers which give such a spectrum as above generally have a high chemical resistance and dimensional stability as well as a high heat resistance.

It polymers as covered by the invention, an aryl group and other components such as sulfur may be connected through ortho-, meta- or para-linkage. However, an aryl group and other components such as sulfur should preferably connected through para-linkage where high strength, high heat resistance and high chemical resistance are particularly required.

In such cases, the resin used should preferably consist mainly of such polymers as poly-p-phenylene sulfide and poly-p-xylylene sulfide.

The expression "polyarylene resins" as used herein represents all forms of materials including fibers, fibrous materials, ultrafine fibrils, films, papers, paper-like materials, powders and fine powders. Needless to say, a polyarylene resin as covered by the invention may comprise various substituents such as the sulfonic group, nitro group and amino group.

The most effective applications of these resins include fibers and films because they can have high strength and chemical resistance when highly extended. Specifically, ultrafine fibers with a fineness of one (1) denier or less, ultrafine fibers with a fineness of 0.5 denier or less in particular, and thin films with a thickness of 40μm or less, thin films with a thickness of 30μm or less in particular, are among the desirable applications because their large surface area promotes the crosslinking among aryl groups and oxidation of sulfur atoms in the backbone chains to achieve a high infusibility.

Crosslinked polyarylene resins as covered by the invention should preferably contain and/or have on their surface powder of at least one of the metals in the group of iron, chromium and cobalt, and/or powder of a compound(s) of these metals.

Such powder can allow crosslinked arylene resins to have fire resistance in addition to further increased heat resistance.

The use of powder of iron and/or powder of an iron-based compound is particularly desirable. Powdered iron and/or iron-based compound not only is low in price but also can offer the unexpected great advantage of increasing the light resistance of sulfur-containing polyarylene resins.

Substances particularly desirable as material for such powder of iron and/or iron-based compound include pure iron and hydrates of oxidized iron which is widely found as iron rust, as well as other various iron oxides including ferrous oxide, ferric oxide, magnetic iron oxides, ferrous hydroxide, and ferric hydroxide. Also very desirable are such substances as iron sulfate, iron sulfide, iron chloride, iron phosphate and various iron carbonyls.

In addition, desirable materials include powdered metallic chromium, various chromium oxides, chromium hydroxides, and other various chromium-based substances such as ferrochromium, as well as powder of their

- 11 -

compounds. Also effective are powdered metallic cobalt and powder of cobalt-based compounds including various cobalt oxides and various cobalt carbonyl compounds.

In particular, powder of metallic compounds is generally more effective than powder of pure metals. Though the reason has not been clarified, observations have shown that polymers can easily become infusible when a powdered metallic compound is used.

Finer powder of metals and/or their compounds are more desirable. In particular, fine powder of less than 0.1mm is very desirable. The expression "powder" as used herein represents fine, short fibrils such as whiskers, as well as particles. What is important is that powder to be used should have as large surface as possible. For the production of these powder materials, special processes are not required, but those widely accepted are generally applicable.

The content and/or extraneous amount of the powdered metal and/or powdered metallic compound used should preferably be at least two (2) weight percent (hereafter denoted by Wt%). It should more desirably be not less than 7Wt% and should still more desirably be not less than 15Wt%. Where both light resistance and fire resistance are required, in particular, powder of such metals and/or metallic compounds should preferably be added up to 7Wt% or more.

There are no specific restrictions on the state of coexistence of powder of these metals and/or their compounds with the sulfur-containing polyarylene resins. Thus, they may be contained in a sulfur-containing polyarylene resin or may be adhered over its surface.

Sulfur-containing polyarylene resins as covered by the invention comprise sulfur-containing polyarylenes as defined above. Needless to say, however, they may comprise other polymers, and they may also contain various additives including flame retardants and inoranic additives such as titanium oxides.

Production methods as covered by the invention are as follows. First, powder of at least one of the metals in the group of iron, chromium and cobalt and/or powder of a compound(s) of these metals is added or adhered to a sulfur-containing polyarylene resin up to 2Wt% or more so that the resin will contain the powder or have the powder on its surface. No special processes are required for the addition or adhesion, but those widely accepted are generally applicable.

Specifically, effective processes include wet blending, dry blending and fused blending of the sulfur-containing polyarylene resin and the powdered metal(s) and/or powdered metallic compound(s), as well as coating

- 13 -

of the surface of the sulfur-containing polyarylene resin with the powder. Various assistants may be used in this process in order to increase or improve the adhesion of the powdered metal(s) and/or powdered metallic compound(s) to the polyarylene resin, or the dispersion of the powdered metal(s) and/or powdered metallic compound(s) in the polyarylene resin. A very desirable way is to add powder of at least one of the metals in the group of iron, chromium and cobalt and/or powder of a compound(s) of these metals so that the sulfur-containing polyarylene resin will contain it. Another desirable way is to coat or impregnate the sulfur-containing polyarylene resin with another polymer which contains the powdered metal(s) and/or the powdered metallic compound(s) in a dissolved or dispersed state. These processes serve to prevent the removal of the powdered metal(s) and/or the powdered metallic compound(s).

Next, the sulfur-containing polyarylene resin having powder of at least one of metals in the group of iron, chromium and cobalt and/or powder of a compound(s) of these metals is heated.

Heating should be performed in an oxygen-containing atmosphere where the sulfur-containing polyarylene resin contains powdered metal alone. In this process, the sulfur-containing polyarylene resin should preferably be heated up to above the glass transition temperature (hereafter referred to as Tg). It is more desirable to heat it up to a temperature near its melting point (hereafter referred to as Tm), specifically, (Tm-50)°C or above. It may be heated up to above the melting point. A maximum heating temperature of (Tm+50)°C is sufficient. Heating up to such a high temperature can achieve an adequately high heat resistance.

Heating near or above the melting point can cause large deformation of resin products, oriented resin moldings in particular. Prior to high temperature heating, therefore, it is desirable to perform preheating at lower temperature to prevent large deformation. The preheated state should preferably be maintained for a certain period of time. This period greatly depends on the type, total amount, diameter and thickness of the sulfur-containing polyarylene resin, and the type and amount of the one to three metals of the group of iron, chromium and cobalt and/or the powder of the compound(s) of these metals. It is difficult, therefore, to prescribe a specific length of time, but preheating should be performed for one (1) second or longer in most cases. These are no specific conditions imposed on the atmosphere for the heating, but an oxygen-containing atmosphere should preferably be used. Very desirable atmospheres include normal air, air with a high oxygen contact and air containing ozone. Also effective are such atmospheres as sulfur oxide and nitrogen oxide.

Where powder of at least one of the metals in the group of iron, chromium and cobalt, and/or powder of a compound(s) of these metals is fused into a sulfur-containing polyarylene resin, adequate care should be taken about such factors as temperature, amount of additives, heating time and atmosphere. Subsequent molding cannot be performed appropriately if the sulfur-containing polyarylene resin becomes infusible during the fused mixing operation. The operation, therefore, should be carried out after adequate examination of the above-mentioned conditions. A vacuum molding process or an atmosphere of an inert gas such as nitrogen should preferably be used where such problems are expected.

Powdered metals and/or powdered metallic compounds as covered by the invention may be removed where it is desirable for a polyarylene resin as covered by the invention to be free from such powdered metals and/or powdered metallic compounds. The removal may be carried out by dissolving or decomposing the powdered metal(s) and/or powdered metallic compound(s). Where an infusible polyarylene resin is produced by coating it with a polymer base material containing powdered metal(s) and/or a powdered metallic compound(s), the removal may be carried out by removing the polymer base material and simultaneously dissolving or decomposing the powdered metal(s) and/or powdered metallic compound(s).

Various processes are available for the removal of powdered metal(s) and/or powdered metallic compound(s). A very desirable removal process is to dissolve the powdered metal(s) and/or powdered metallic compound(s). Acids are very effective for the dissolution of powdered metal(s) and or powdered metallic compound(s). In particular, hydrochloric acid is very effective for iron oxides. Such treatment can be effective because polyarylene resins as covered by the invention are highly resistant to chemicals. It is effective also for resins which are coated with a polymer containing a powdered metal(s) and/or powdered metallic compound(s). Various chemicals are available for the decomposition or dissolution of polymer coats.

Resins as covered by the invention which consist mainly of poly-p-phenylene sulfide are generally extremely high in chemical resistance to permit easy removal of powdered metal(s) and/or powdered metallic compound(s).

Another method as covered by the invention is to produce positively such substances as magnetic iron oxide, which is a metallic compound of iron, over the surface of such material as iron; cover the surface with such material as film made of a sulfur-containing polyarylene resin; and then heat it to form a strong coat over the iron surface. In such cases, the metallic compound may not be in the form of powder.

The invention serves to achieve the following objectives.

①  Highly heat- and chemical-resistant resins and moldings of sulfur-containing polyarylene can be produced easily.

②  Highly dimensionally stable resins and moldings of sulfur-containing polyarylene can be produced easily.

③  Composites high in heat and chemical resistance can be produced by combining such a resin with other material.

④  In particular, sulfur-containing polyarylene resins combined with powdered iron and/or powdered iron oxide are high in resistance to light.

⑤  In particular, sulfur-containing polyarylene resins extremely high in chemical resistance in addition to being high in fire resistance can be produced if PPS is used as sulfur-containing polyarylene material.

⑥  Resistance to heat deterioration near the melting point is largely increased.

Resins as covered by the invention can be widely applied to different areas as below.

Base material for heat- and fire-resistant electric cable cladding, base material for heat-resistant cladding of various electric cables, protective material for optical fiber, heat-resistant filter, heat-resistant film, chemical-resistant filter, bag filter, filter for coal-firing boiler, heat- and fire-resistant paper, heat- and fire-resistant insulating sheet, base material for printed circuit board, base material for chemical-resistant filter, fire- and heat-resistant wall material, airplane wall material, automobile wall material, chemical-resistant base material, material for special charcoal, material for special charcoal fiber, etc. Material for electromagnetic wave seal, various heat- and chemical-resistant materials, etc.

[Practical Examples]

Example 1

Infusible PPS with iron oxide attached over its surface was produced by mixing and heating poly-p-phenylene sulfide, supplied from Toray-Phillips Petroleum Co., and powdered iron oxide (characteristics of the two materials are described below).

(1) Characteristics of PPS Before Infusibility improvement

① Melting point: approximately 285°C

②  Molecular composition: copolymeric PPS with a degree of crosslinking of 0.1Wt%

③  PPS particle size:  2mm or less

(2)  Characteristics of Iron Oxide

①  Type:  magnetic iron oxide

②  Iron oxide particle size:  extremely fine powder

(3)  Mixing of two materials:  dry mixing of the two powdered materials in air at normal temperature

(4)  Mixing ratio:  20Wt% ferric oxide

(5)  Heating procedure:  Stirring and mixing of a mixture of PPS and ferric oxide in air in an open system in an electric heater.

(6)  Heating  temperature:  320°C  maximum.  The heating rate was such that the temperature of 320°C was achieved in 20 minutes, followed by quenching.  During the process, particles maintained their original shape without significant changes.

(7)  Characteristics of Resultant Infusible PPS

①  Melting point:  The material obtained was highly heat-resistant, modified PPS which did not melt even at 400°C, to say nothing of 285°C.

②  Molecular  structure:  Crosslinking  is  formed among 30 molar percent of the phenyl groups in the PPS material.  The crosslinking is formed mainly  through  an  oxygen  atom  connecting  two phenyl groups. In addition, seven (7) molar percent of the sulfur atoms in the PPS backbone chains are oxidized.

Fig. 1 shows a spectrum of a material as covered by invention which was observed by the CP/MAS method using high-resolution solid NMR equipment (JNM-FX100) with an radioactive isotope of carbon (C) as measuring nucleus under the conditions of a frequency of 100 hertz, a contact time of 2 milliseconds and a pulse separation of 3.8 seconds. Fig. 2 illustrates a spectrum observed by the dipole dephasing method.

In the spectrum taken by the CP/MAS method, a peak occurs at 134.1ppm and the intensity at 139ppm divided by that at 134.1ppm gives 0.61. The spectral band intensity at 118ppm and 53ppm divided by that at the peak gives 0.18 and 0.11, respectively.

Similarly, the spectrum by the dipole dephasing has a peak at 136.4ppm. The spectral band intensity at 139ppm divided by that at the peak gives 0.75.

Example 2

A composite consisting of iron and an infusible PPS material as produced in Example 1 was put in 12% hydrochloric acid and stirred, and after exchanging hydrochloric acid five (5) times, the material was washed in water to remove the oxidized iron. No significant changes occurred in the infusible PPS material during the process. The material had basically the same characteristics as the material produced in Example 1. Specifically, it was high heat-resistant, modified PPS which did not melt at 400°C, and most crosslinks were formed through an oxygen atom connecting two phenyl groups.

In addition, seven (7) molar percent of the sulfur atoms in the backbone chains were found to have been oxidized. The material gave a spectrum similar to the one in Example 1, indicating that it would not be modified by hydrochloric acid treatment.

Example 3

A non-crosslinked PPS product, supplied by Toray-Phillips Petroleum Co., was melted, molded, and heated with iron oxide to form fusion-resistant film.

(1)  Characteristics of Iron Oxide

①  Type:  Ferric oxide, extremely fine powder

②  Content:  12Wt%

(2)  Addition/Melting/Molding:  Powder of the PPS (same particle size as in Example 1) and powder of the ferric oxide were wet-mixed, melted and molded. Both the wet-mixing and melting/molding processes were performed under nitrogen-sealed condition to eliminate oxygen. The melting/molding process was carried out at 315°C, followed by uniaxial stretching up to an approximately five-fold length. Then heat treatment was performed with the length of the material maintained constant in air at 200°C for two (2) minutes to produce film.

(3) Thickness of Resultant Film: approximately 50µm

(4) Heat Treatment: The film was press-fused to a hot iron plate heated in air at 320°C, followed by heat treatment at 295°C for about three (3) minutes. During the process, no changes occurred in the basic shape of the film. Its NMR spectrum was similar to that in Example 1. Before the process, the iron plate had been pretreated and has so-called black rust on its surface.

(5) Characteristics of Resultant Composite

① Melting point: infusible at 400°C

② Molecular structure: 15 molar percent of the phenyl groups in the PPS were involved in crosslinking. As in Example 1, crosslinking was formed mainly through an oxygen atom connecting two phenyl groups. The fraction of oxidized sulfur atoms in the backbone chains was less than two (2) molar percent. Its NMR spectrum was similar to that in Example 1.

③ Light resistance: Light deterioration test was performed by irradiation in a weatherometer. Results showed that the material was about three times as high in light resistance as conventional PPS products.

Example 4

A PPS polymer produced as in Example 1 was spinned and drawn under the following conditions into fibrous PPS filament

   (1)   Fiber Production Conditions

   ①   Spinning temperature:  315°C

   ②   Spinning rate:  1000m/min (spinned through 350°C heating cylinder fixed to spinning nozzle)

   ③   Drawing:  hot roller/hot plate, temperature 90°C/150°C

   ④   Drawing ratio:  approximately 3.5 times

   (2)   Characteristics of Resultant Fiber

   ①   Melting point:  approximately 285°C

   ②   Strength:  5.8g/(denier)

   ③   Fineness:  150 denier, 48 filaments

   (3)   Weaving/Heat Treatment/Characteristics of Resultant Fiber

Fiber was weaved and set at 230°C with its length maintained constant. Both sides of the sheet were then coated with slurry material consisting of powdered ferric oxide dispersed in water. The amount of extraneous ferric oxide was equivalent to about 20Wt% after drying. The sheet was put around a piece of wire and heated in a heating furnace at 295°C for about 10 minutes to produce an electric cable. The PPS material showed practically satisfactory insulation performance. It did not melt at 400°C, and hand self-extinguishing properties.

During the heating process, the fiber shrinked to cover the wire firmly, but no significant changes occurred in its basic shape. Observation of the molecular structure of the fiber showed that 18 molar percent of the phenyl groups in the PPS material were involved in crosslinking. Crosslinks were formed mainly through an oxygen atom connecting two phenyl groups. Five (5) molar percent of the sulfur atoms in the backbone chains were oxidized. Its NMR spectrum was similar to that in Example 1.

Example 5

Iron-containing PPS as described in Example 3 was spinned and drawn into fiber as in Example 4. The fiber was put around a piece of wire, and operations as described in Example 4 were carried out to produce a highly fusion-resistant electric cable. The PPS material was found to have practically satisfactory electric insulation performance.

The PPS did not melt at 400°C, and had self-extinguishing properties. During the process, the fiber shrinked to cover the wire firmly. Its external shape was maintained. No iron-based material was extracted also in this case. Observation of the structure of the PPS material showed that 11 molar percent of the phenyl groups in the PPS fiber were involved in the crosslinks, which were mainly formed through an oxygen atom connecting two phenyl groups. It was also found that five (5) molar percent of the sulfur atoms in the backbone chains were oxidized. The NMR spectrum observed was similar to that obtained in Example 1.

Example 6

Ultrafine fiber was produced under the following conditions.

(1) Fiber Production Procedures

① Spinning process: sea/island type special spinning equipment (polymer fiber spinning equipment)

② Island component: polymer as described in Example 1

③ Sea component: polystyrene

④ Ratio of island: 80Wt%

⑤ Spinning temperature: 315°C

⑥ Spinning: 1200m/min

⑦ Drawing process: same as in Example 3

⑧ Drawing ratio: approximately 3

(2) Characteristics of Resultant Fiber

① Fineness of fiber: 72 denier, 24 filaments

(3) Weaving/Sea Removal/Heat Treatment/ Characteristics of Resultant Infusible Material

Using the fiber, a sheet was weaved in the same procedures as in Example 4, followed by dissolution and removal of polystyrene with trichlene. After removal of islands, the sheet was irradiated with plasma (in an atmosphere with a very small content of oxygen). A cable was produced by the same procedures as in Example 4. The resultant cable was found to have good properties as in Example 4. The amount of powdered ferric oxide was equivalent to 17Wt%.

The cable was also found to have heat resistance at 400°C, self-extinguishing properties and flexibility. About 30 molar percent of the phenyl groups in the material were found to be involved in crosslinking. Most crosslinks were formed through ether linkage while direct connection between phenyl groups was also detected. In addition, 15 molar percent of the sulfur atoms in the backbone chains were involved in crosslinking. In particular, this fiber suffered from smaller shrinkage, resulting in a good cable.

Its NMR spectrum was similar to that in Example 1.

Example 7

Aqueous PVA solution containing dispersed magnetic iron oxide was added to PPS fiber produced as in Example 1, followed by drying in a hot air stream of 80°C. The amount of attached iron oxide was equivalent to 25Wt%. The fiber was then subjected to heat treatment, with its length maintained constant, at 200°C for one (1) minute, followed by additional heat treatment in air at 275°C for 15 hours. Next, the fiber was immersed in 15Wt% sodium hydroxide solution, followed by the removal of PVA and iron oxide as in Example 2. The resultant material had a dark brown color, resistance to heat at 400°C and self-extinguishing properties.

The material was found to have a strength of 3.1g/(denier) and chemical resistance such as to withstand the treatment for removing iron oxide and PVA. No solvent was dissolved at temperatures below 200°C. Crosslinking was found to be formed among about 35 molar percent of the phenyl groups in the material. Most crosslinks were formed through ether linkage while direct connection between phenyl groups was also detected. In addition, 17 molar percent of the sulfur atoms in the backbone chains were involved in crosslinking. Its NMR spectrum was similar to that in Example 1.

Example 8

A sheet made of ultrafine fiber produced as in Example 6 was impregnated with water containing dispersed ferric oxide powder. The amount of ferric oxide powder added was equivalent to 10Wt%. The sheet was left in a heating furnace containing air of 275°C for 10 hours for heat deterioration testing. The degree of crosslinking and that of sulfur oxidation in the sheet after the heat treatment was 27 molar percent and 15 molar percent, respectively. Ether linkage accounted for the major part of the crosslinks. Crosslinks through direct connection between phenyl groups were also found. Its NMR spectrum was nearly the same as that in Example 1.

Though having the color of ferric oxide, the sheet was found to be high in flexibility and heat resistance. A bending test of the sheet was carried out to evaluate its heat deterioration. The bending test procedures used were as follows. A strip with a length of 20cm and width of 2cm was cut out of the sheet. The strip was folded and one of its end was put on the other end so that the two portions from the fold to each end make an angle of 0°. A 500g plate with a length of 15cm and width of 3cm was placed on the strip during this operation. Then the weight was removed and the strip was unfolded so that the two portions from the fold to each end make an angle of 180°, followed by folding the strip again. For the bending test, the folding and unfolding cycle was repeated until 5mm or more of the fold portion was broken. The break point was registered as the number of times of the above cycles repeated.

The number of repeating times is smaller for test pieces suffering from heavier heat deterioration. Thus, evaluation of heat resistance was performed in terms of this quantity.

In this test, the material produced above in this example gave a break point of larger than 1000. A sheet which had not been heat-treated also gave a break point of larger than 1000. These results indicate that the material was extremely high in resistance to heat deterioration.

For comparison, heat treatment and testing for resistance to heat deterioration were carried out for a sheet made only of ultrafine PPS fiber (ultrafine PPS fiber without ferric oxide added). The sheet became dark brown, and was broken after only one bending cycle.

This indicates that the material suffered from so severe damage that it was broken by only one bending cycle in the bending test.

Example 9

PPS resin produced as in Example 1 and containing 3Wt% powdered ferric oxide was molded into pellets, which were then spinned and drawn to form fiber with a monofilament fineness of approximately two (2) denier. The fiber was treated with water containing dispersed ferric oxide. The amount of ferric oxide attached over the surface was equivalent to 15Wt%. Next, the fiber was heat-treated at 200°C while maintaining its length constant, followed by additional heat treatment in air at 280°C for 10 hours. The temperature was further raised to 400°C at a rate of 5°C/min and additional heat treatment was carried out at 900°C for 20 minutes to carbonize the fiber. The above treatment at 280°C for 10 hours resulted in a degree of crosslinking of 40 molar percent and a degree of sulfur deoxidation of larger than 25%. Most crosslinks were accounted for by ether linkage while direct connection between phenyl groups was also seen. No significant technical problems occurred during the process. Finally, the material was treated with hot steam of 900°C to form activated carbon fiber.

Surprisingly, the fiber was found to be able to adsorb nitrogen oxide. Specifically, about 1g of the activated carbon fiber adsorbed 290mg of nitrogen oxide. Similar observation showed that conventional commercial activated carbon fiber products had an adsorption capacity of less than 10mg.

Comparative Example 1

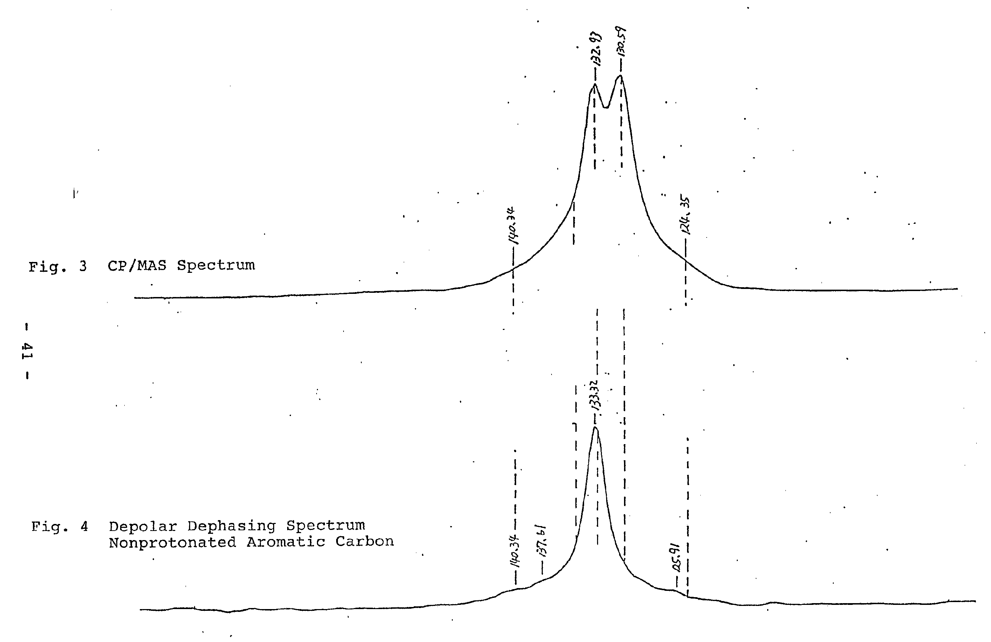

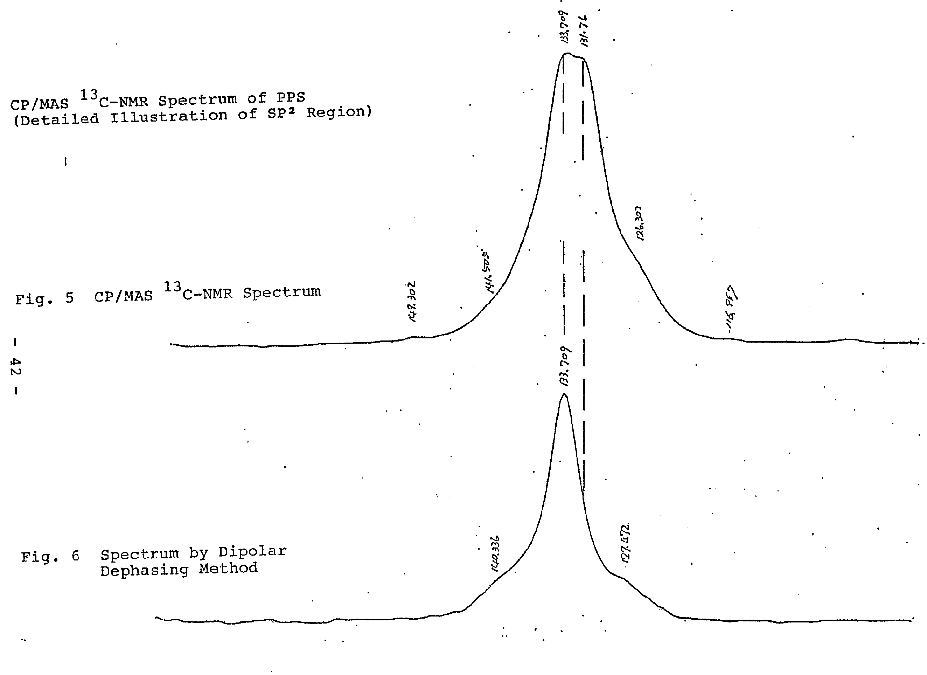

PPS particles produced as in Example 1 which contains 0.5Wt% powdered ferric oxide was found to melt when subjected to the same treatment as in Example 1. Thus, the melt was quenched and the melting point of the material was measured. Its melting point was found to be almost the same as that before the treatment. Crosslinks among molecules or oxidation of sulfur atoms in the backbone chains were not detected. A spectrum of the material observed by the CP/MAS method is illustrated in Fig. 3, and a spectrum by the dipole dephasing method is shown in Fig. 4. The spectrum by the CP/MAS method contains peaks at 130.6ppm and 132.9ppm. The spectral band intensity at 139ppm divided by that at 133.7ppm gave 0.12. Division of the spectral intensity at 118ppm and 153ppm gave quotients less than 0.22.

The spectrum by the dipole dephasing method contains a peak at 133.3ppm. The spectral intensity at 139ppm divided by that at 134ppm gave a quotient of 0.10.

Figs. 5 and 6 show NMR spectra of PPS observed immediately after polymerization. The peak positions and spectral intensities around the peak are somewhat different from those in Figs. 3 and 4, but other values are nearly the same, indicating that the heat treatment did not cause essential modification in the PPS material.

Brief Explanation of the Drawings

Figs. 1 and 2 illustrate high-resolution solid NMR spectra of crosslinked polyarylene resins described in Example 1.

The spectra given in Figs. 1 and 2 were observed by

- 33 -

the CP/MAS method and the dipole dephasing method, respectively.

Figs. 3, 4, 5 and 6 illustrate high-resolution solid NMR spectra of polyarylene resins described in Comparative Example 1. The spectra in Figs. 3 and 5 were observed by the CP/MAS method, and those in Figs. 4 and 6 were observed by the dipole dephasing method.

## Claims

1. Crosslinked polyarylene resins which are characterized by the fact that they are made of sulfur-containing polyarylene resins with sulfur atoms contained in the backbone chains and that the degree of crosslinking among aryl groups in the resins is five (5) percent or greater.

2. Crosslinked polyarylene resins as described in Claim 1 which have a degree of crosslinking among aryl groups of 12 percent or greater.

3. Crosslinked polyarylene resins as described in Claims 1 and 2 in which polyphenylene sulfide is used as the sulfur-containing polyarylene resin.

4. Crosslinked polyarylene resins as described in Claims 1 to 3 which are characterized by the fact that at least two (2) molar percent of the sulfur atoms in the backbone chains form sulfoxide and/or sulfone.

5. Crosslinked polyarylene resins as described in Claims 1 to 4 in which crosslinks are formed through ether linkage.

6. Crosslinked polyarylene resins which are characterized by the fact that a peak appears at around 134ppm in their spectra observed by the CP/MAS method combined with high-resolution solid NMR equipment using a radioactive isotope of carbon (C) under the conditions of a frequency of 100 megahertz, a contact time of two (2) milliseconds and a pulse separation of 3.8 seconds and that the spectral band intensity at 139ppm divided by that at the peak gives a quotient equal to or greater than 0.3.

7. Crosslinked polyarylene resins as described in Claim 6 which are characterized by the fact that a peak appears around 134ppm in their spectra observed by the CP/MAS method and that the spectral band intensity at 139ppm divided by that at the peak gives a quotient equal to or greater than 0.5.

8. Crosslinked polyarylene resins which are characterized by the fact that a peak appears around 136ppm in their spectra observed by the dipole dephasing method combined with high-resolution solid NMR equipment using a radioactive isotope of carbon (C) under the conditions of a frequency of 100 megahertz, a contact time of two (2) milliseconds and a pulse separation of 3.8 seconds and that the spectral band intensity at 139ppm divided by that at the peak gives a quotient equal to or greater than 0.3.

9. Crosslinked polyarylene resins as described in Claim 8 which are characterized by the fact that a peak appears around 136ppm in their spectra observed by the dipole dephasing method and that the spectral band intensity at 139ppm divided by that at the peak gives a quotient equal to or greater than 0.5.

0320514

10. Crosslinked polyarylene resins as described in Claims 6 and 7 which are characterized by the fact that a peak appears around 134ppm in their spectra observed by the CP/MAS method and that the spectral band intensity at 118ppm and 153ppm divided by that at the peak gives a quotient equal to or greater than 0.08 and 0.04, respectively.

11. Sulfur-containing polyarylene resin composites which are characterized by the fact that they consist of a sulfur-containing polyarylene resin whose backbone chains contain sulfur atoms, and powder of at least one of the metals in the group of iron, chromium and cobalt, and/or powder of a compound(s) of these metals, with the total powder content being two (2) weight percent or more relative to the weight of the resin.

12. Crosslinked polyarylene resins as described in Claims 1 to 11 which are composites in the form of fiber, film and/or paper made of such polyarylene resins.

13. Crosslinked polyarylene resins as described in Claim 12 which are in the form of ultrafine fiber with a fineness of one (1) denier or less.

14. Crosslinked polyarylene resin production methods which are characterized by a process where a sulfur-containing polyarylene resin whose backbone chains contain sulfur atoms is heated in contact with powder of a compound(s) of at least one of the metals in the group of iron, chromium and cobalt.

15. Crosslinked polyarylene resin production methods which are characterized by a process where a sulfur-containing polyarylene resin is heated in contact with oxygen and powder of at least one of the metals in the group of iron, chromium and cobalt, and/or in contact with powder of a compound(s) of these metals.

16. Crosslinked polyarylene resin production methods which are characterized by a process where a sulfur-containing polyarylene resin is heated in contact with oxygen and powder of at least one of the metals in the group of iron, chromium and cobalt, and/or in contact with powder of a compound(s) of these metals, followed by the removal of that powdered metal(s) and/or metallic compound(s).

17. Crosslinked polyarylene resin production methods which are characterized by a process where a sulfur-containing polyarylene resin is coated and/or impregnated with powder and/or powder dispersion of a compound(s) of at least one of the metals in the group of iron, chromium and cobalt, followed by heating.

18. Crosslinked polyarylene resin production methods as described in Claims 14 to 17 where the sulfur-containing polyarylene resins are in the form of film or fiber.

19. Crosslinked polyarylene resin production methods as described in Claim 18 where the fiber is in the form of ultrafine fiber with a fineness of one (1) denier or less.

20. Crosslinked polyarylene resin production methods as described in Claims 14 to 19 where the heating temperature is equal to or higher than the melting point of the sulfur-containing polyarylene resin minus 50°C.

21. Crosslinked polyarylene resin production methods as described in Claim 16 where the removal of the metallic compound(s) is carried out by dissolution and removal with hydrochloric acid.

CP/MAS $^{13}$C-NMR Spectrum of Infusible PPS
(Detailed Illustration of SP² Region)

Fig. 1   CP/MAS $^{13}$C-NMR Spectrum

Fig. 2   Dipolar Dephasing Method

Fig. 3   CP/MAS Spectrum

Fig. 4   Depolar Dephasing Spectrum
         Nonprotonated Aromatic Carbon

CP/MAS $^{13}$C-NMR Spectrum of PPS
(Detailed Illustration of SP² Region)

Fig. 5 CP/MAS $^{13}$C-NMR Spectrum

Fig. 6 Spectrum by Dipolar
Dephasing Method

0320514

# INTERNATIONAL SEARCH REPORT

International Application No   PCT/JP88/00594

## I. CLASSIFICATION OF SUBJECT MATTER (if several classification symbols apply, indicate all) [6]

According to International Patent Classification (IPC) or to both National Classification and IPC

    Int.Cl[4]    C08G75/02, C08L81/02

## II. FIELDS SEARCHED

### Minimum Documentation Searched [7]

| Classification System | Classification Symbols |
|---|---|
| IPC | C08G75/02, 75/18-75/20, C08L81/02-81/06 |

### Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 61-213262 (Asahi Glass Co., Ltd.) 22 September 1986 (22. 09. 86) Page 2, lower right column, line 4 to page 4, upper left column, line 10 (Family: none) | 1-20 |
| A | JP, A, 59-90670 (Sekisui Chemical Co., Ltd.) 25 May 1984 (25. 05. 84) Page 2, upper right column, line 7 to page 3, upper left column, line 6 (Family: none) | 1-20 |
| X | JP, A, 54-155300 (Asahi Glass Co., Ltd.) 7 December 1979 (07. 12. 79) Page 1, lower left column, line 4 to page 5, upper right column, line 6 & US, A, 4,274,933 & GB, A, 2,021,608 & DE, A, 2,922,072 & FR, A, 2,427,350 | 1-20 |
| X | JP, A, 58-49749 (Hitachi, Ltd.) 24 March 1983 (24. 03. 83) Page 1, lower left column, line 5 to page 2, lower right column, line 4 | 1-20 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| September 6, 1988 (06. 09. 88) | September 19, 1988 (19. 09. 88) |
| International Searching Authority | Signature of Authorized Officer |
| Japanese Patent Office | |

Form PCT ISA 210 (second sheet) January 1985)

| FURTHER INFORMATION CONTINUED FROM THE SECOND SHEET | |
|---|---|
| (Family: none) | |
| X  JP, A, 58-173132 (Siemens A.G.)<br>12 October 1983 (12. 10. 83)<br>Page 1, lower left column, line 3 to<br>page 2, lower right column, line 9<br>& DE, A, 3,210,873 & EP, A, 89,668 | 1-20 |
| X  JP, A, 59-1535 (Phillips Petroleum<br>Company)<br>6 January 1984 (06. 01. 84)<br>Page 1, lower left column, line 4 to<br>page 3, lower right column, line 9 | 1-20 |

**V.☐ OBSERVATIONS WHERE CERTAIN CLAIMS WERE FOUND UNSEARCHABLE** [10]

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)